# EUROPÄISCHE PATENTSCHRIFT

(11) **EP 1 874 002 B1**
(45) Veröffentlichungstag und Bekanntmachung des Hinweises auf die Patenterteilung: **01.06.2016**
(21) Anmeldenummer: 07104913.4
(22) Anmeldetag: 26.03.2007
(51) Int. Cl.: H04L 29/08, A01B 79/00, A01B 79/02, A01D 41/127, A01D 43/08, H04L 29/06

(54) **Kommunikationsnetz mit einer Mehrzahl von Knoten, die auf mobilen Maschinen installiert sind, und Betriebsverfahren dafür**
Communication network with a plurality of nodes installed on mobile machines and corresponding process
Réseau de communication comprenant une pluralité de noeuds installés sur des machines mobiles et procédé correspondant

(30) Priorität: 21.06.2006 DE 102006028909
(43) Veröffentlichungstag der Anmeldung: 02.01.2008
(73) Patentinhaber: CLAAS Selbstfahrende Erntemaschinen GmbH, 33428 Harsewinkel (DE)
(72) Erfinder: Fitzner, Werner, 48231, Warendorf (DE); Wippersteg, Heinz-Hermann, 32257, Bünde (DE); Steckel, Thilo, 33330, Gütersloh (DE)
(74) Vertreter: Ellerbrächter, Dirk

(56) Entgegenhaltungen:
- EP-A- 1 219 153
- WO-A-00/58800
- WO-A-01/24386
- JP-A- 7 303 105
- US-A1- 2004 063 458
- ADACHI T ET AL: "A HANDOFF EXAMINATION OF A HYBRID SYSTEM USING CELLULAR AND AD-HOC MODES" IEICE TRANSACTIONS ON COMMUNICATIONS, COMMUNICATIONS SOCIETY, TOKYO, JP, Bd. E83-B, Nr. 11, November 2000 (2000-11), Seiten 2494-2500, XP001065366 ISSN: 0916-8516

## Beschreibung

Die vorliegende Erfindung betrifft ein Kommunikationsnetz vom Typ mit einer Mehrzahl von Knoten, die mit Sender-Empfängereinheiten für leitungsungebundene Kommunikation ausgestattet sind, wobei wenigstens einige dieser Knoten, als mobile Knoten bezeichnet, auf mobilen Maschinen installiert sind, sowie ein Betriebsverfahren für ein solches Kommunikationsnetz.

Ein Kommunikationsnetz dieses Typs, das auf dem Gebiet der Landwirtschaft eingesetzt wird, ist zum Beispiel aus DE 43 22 293 A1 bekannt. Leitungsungebundene Kommunikationsnetze sind in einer großen Vielfalt von Typen allgemein bekannt. Ein Großteil der bewohnten Erdoberfläche ist abgedeckt von zellularen Mobilfunk-Kommunikationsnet - zen, doch ist diese Abdeckung lückenhaft, vor allem in ländlichen Gebieten, und es ist nicht damit zu rechnen, dass sich dieses Problem grundlegend ändern wird. Vielmehr wird erwartet, dass die Flächenabdeckung moderner breitbandiger Mobilfunknetze der vierten Generation, wie etwa der UMTS-Netze, noch auf lange Zeit geringer sein wird als die der etablieren Netze der dritten Generation, etwa nach dem GSM-Standard. Ein Kommunikationsnetz, das an einem beliebigen Ort der Erdoberfläche funktionieren soll, muss daher so beschaffen sein, dass es nicht oder zumindest nicht ständig auf die Verfügbarkeit von zellularer Hobilfunk-Kommunikationsinfrastruktur angewiesen ist.

Ein weitere bekannter Typ von Kommunikationsnetzen für leitungsungebundene Kommunikation sind die sogenannten WLANs (Wireless Local Area Networks, kabellose lokale Netzwerke) oder WIMAX-Netze, die meist nach einem Standard der IEEE 802.11 - bzw. 802.16-Familie arbeiten. Die Reichweite einer Funkverbindung in einem solchen Netzwerk liegt typischerweise in einer Größenordnung von 30 bis 100 m, bestenfalls bis zu 300 m im Falle von WLAN bzw. bei ein paar Kilometern im Falle von WIMAX, und sie kann nicht ohne weiteres erhöht werden, da die zulässige Sendeleistung eines solchen Netzes in vielen Ländern durch Gesetz begrenzt ist. Da außerdem in diesen Netzen eine Weiterreichung von Daten zwischen Ursprungs- und Zielknoten über intermediäre Knoten nicht vorgesehen ist, ist eine Kommunikation zwischen zwei Knoten nicht möglich, wenn ihr Abstand voneinander größer als die Reichweite einer Funkverbindung ist, selbst wenn zwischen diesen zwei Knoten weitere Knoten des Netzwerkes vorhanden sind und der Abstand zwischen zwei nächstbenachbarten Knoten niemals größer ist als diese Reichweite.

Die WO 00/5880 offenbart ein Datenaustauschsystem zwischen mobilen Arbeitsmaschinen, wobei die mobilen Arbeitsmaschinen Fahrtroutendaten untereinander austauschen, um auf effiziente Weise ein gemeinschaftlich zu bearbeitendes Territorium abzuernten. Derartige Kommunikationssysteme haben jedoch den Nachteil, dass die miteinander kommunizierenden mobilen Maschinen eine enge räumliche Nähe zueinander aufweisen müssen, damit der Datenaustausch zwischen den mobilen Maschinen stets gewährleistet ist.

Aufgabe der vorliegenden Erfindung ist, ein Kommunikationsnetz vom eingangs angegebenen Typ zu schaffen, das es erlaubt, an einem gegebenen Knoten des Netzes den Betriebszustand einer entfernten mobilen Maschine auch dann abzuschätzen, wenn momentan keine direkte Kommunikation mit einem Knoten der entfernten Maschine möglich ist.

Die Aufgabe wird bei einem Kommunikationsnetz mit einer Mehrzahl von Knoten, die mit Sender-Empfängereinheiten für leitungsungebundene Kommunikation ausgestattet sind, darunter als mobile Knoten bezeichnete Knoten, die auf mobilen Maschinen installiert sind, dadurch gelöst, dass jedem Knoten ein Speicher für Betriebsparameterprofile mehrerer der mobilen Maschinen zugeordnet ist und dass jeder Knoten eingerichtet ist, in dem ihm zugeordneten Speicher gespeicherte Betriebsparameterprofile über seine Sender-Empfängereinheiten auszustrahlen und anhand eines von einem anderen Knoten her empfangenen Betriebsparameterprofils einer der mobilen Maschinen das in dem ihm zugeordneten Speicher gespeicherte Profil dieser Maschine zu aktualisierten. Durch die in den Speichern gespeicherten Betriebsparameterprofile hat jeder Knoten Kenntnis vom Betriebszustand mehrerer, vorzugsweise aller in dem Netzwerk zusammenarbeitenden Maschinen. Diese Kenntnis ist zwar nicht zwangsläufig immer auf dem letzten Stand, sie ist aber dennoch hilfreich, um es einem Benutzer oder einem Dienstprogramm zu ermöglichen, den weiteren Einsatz der Maschinen sinnvoll und wirtschaftlich zu planen.

Indem die Knoten diese Betriebsparameterprofile ausstrahlen, wird die Möglichkeit beschaffen, dass die Knoten die Kenntnis von den Betriebszuständen der Maschinen untereinander austauschen und dabei jeweils nur das aktuellste Betriebsparameterprofil jeder Maschine gespeichert halten. So kann sich die Kenntnis vom Betriebszustand einer Maschine von deren eigenem Knoten aus - eventuell in mehreren aufeinanderfolgenden Schritten - in dem Kommunikationsnetz ausbreiten. Entscheidungen, die zum Beispiel den wirtschaftlichsten Einsatz der mobilen Maschinen betreffen, können an jedem Knoten des Netzwerkes anhand der dort verfügbaren Profilinformationen getroffen werden.

Einem bevorzugten Anwendungsbeispiel zufolge umfassen die mobilen Maschinen landwirtschaftliche Arbeitsmaschinen und/oder Transportmaschinen, zum Beispiel Erntemaschinen, die sich zum Einbringen eines Erntegutes fortlaufend bewegen, sowie Transportfahrzeuge, die Erntegut von den Erntemaschinen abholen, um es zu einem Lager- oder Weiterverarbeitungsort zu befördern.

Um die Erntemaschinen und die Transportfahrzeuge wirtschaftlich zu nutzen, ist es zweckmäßig, wenn unter den in den Profilen gespeicherten Betriebsparametern jeder Maschine unter anderem der Füllstand eines Ernteguttanks der Maschine sowie ihr Standort angegeben ist, Anhand dieser Parameter kann z.B. ein Transportfahrzeug (oder ein Fahrer desselben) eine Entscheidung darüber treffen, welche von mehreren Erntemaschinen am zweckmäßigsten und wirtschaftlichsten als nächste zu entladen Ist, um zum Beispiel Fahrstrecken der Transportfahrzeuge und/oder Totzeiten der Erntemaschinen aufgrund eines vollen Vorratsbehälters zu minimieren.

Um eine solche Entscheidung optimal zu treffen, ist es ferner zweckmäßig, wenn einer der in den Profilen gespeicherten Betriebsparameter eine Angabe über die Leistungsfähigkeit der Maschine beinhaltet. Je höher diese ist, um so wichtiger ist es im Allgemeinen auch für einen wirtschaftlichen Betrieb, dass die Maschine kontinuierlich mit voller Leistung arbeiten kann, weswegen der Vorratstank einer leistungsfähigeren Maschine zweckmäßigerweise mit höherer Priorität entladen wird als der einer weniger leistungsfähigen.

Um die Aktualisierung der Betriebsparameterprofile in den den verschiedenen Knoten zugeordneten Speichern korrekt durchführen zu können, ist zweckmäßigerweise jedem gespeicherten Betriebsparameterprofil eine Zeitangabe zugeordnet, und die Knoten sind vorzugsweise eingerichtet, bei der Aktualisierung der Betriebsparameterprofile von zwei eine gleiche mobile Maschine betreffenden Profilen (das heißt im Allgemeinen einem im Speicher des Knotens gespeicherten Profil und einem von einem anderen Knoten her empfangenen Profil) zu ermitteln, welches der beiden Profile das ältere ist, und dieses ältere Profil zu überschreiben.

Eine erste Ausgestaltung einer von einem ersten Knoten bei einer Aktualisierung eines Profils ausgeführten Prozedur hat die Schritte:
a) Empfangen eines Satzes von Zeitangaben, von denen jede jeweils einem Profil einer Maschine in einem einem zweiten Knoten zugeordneten Speicher zugeordnet ist, von dem zweiten Knoten,
b) durch Vergleichen mit den entsprechenden Zeitangaben im dem ersten Knoten zugeordneten Speicher, Ermitteln der Maschinen, deren Profile in dem dem ersten Knoten zugeordneten Speicher überschrieben werden müssen,
c) Auffordern des zweiten Knotens zur Übermittlung der Profile dieser Maschinen, und
d) Speichern der von dem zweiten Knoten auf die Aufforderung hin übermittelten Profile anstelle der zu überschreibenden Profile.

Indem zunächst nur die Zeitangaben übermittelt werden, kann der erste Knoten beurteilen, welches die Profile sind, die er von dem zweiten Knoten benötigt, und kann speziell diese anfordern. Durch eine solche Vorgehensweise wird die zwischen den Knoten zu übertragende Datenmenge gering gehalten, was insbesondere dann wichtig ist, wenn Übertragungsbandbreite knapp ist oder die Übertragung, wie bei Nutzung eines zellularen Mobilfunknetzes normalerweise der Fall, von der übertragenen Datenmenge oder der benötigten Übertragungszeit abhängige Kosten verursacht.

Die in Schritt a) empfangenen Zeitangaben können darüber hinaus dazu benutzt werden, in Schritt b) ferner zu ermitteln, welche Profile in dem Speicher des zweiten Knotens überschrieben werden müssen, so dass in einem weiteren Schritt e) diese Profile an den zweiten Knoten übermittelt werden können. So genügt die Übertragung der Zeitangaben vom zweiten an den ersten Knoten in Schritt a), um in beiden Knoten die Aktua3lisierung der Profile vornehmen zu können.

Alternativ kann der erste Knoten eine Aktualisierung durch folgende Schritte ausführen:
a') Empfangen eines in einem einem zweiten Knoten zugeordneten Speicher gespeicherten Profils und einer diesem Profil zugeordneten Zeitangabe von dem zweiten Knoten,
b') Vergleichen der empfangenen Zeitangabe mit der entsprechenden Zeitangabe im dem ersten Knoten zugeordneter Speicher und Überschreiben des Profils im dem ersten Knoten zugeordneten Speicher mit dem empfangenen Profil, wenn der Vergleich ergibt, dass die diesem letzteren Profil zugeordnete Zeitangabe die jüngere ist,

Bei dieser Vorgehensweise ist die von dem zweiten Knoten auszustrahlende Datenmenge zwar größer als bei der zuvor beschriebenen ersten Prozedur, da der zweite Knoten ein gespeichertes Profil auch dann überträgt, wenn es zur Aktualisierung am ersten Knoten nicht benötigt wird, doch hat diese letztere Vorgehensweise den Vorteil, dass sie einfach implemontierbar ist, da der zweite Knoten keinerlei Rückmeldung vom ersten Knoten benötigt.

In Ermangelung einer solchen Rückmeldung ist es zweckmäßig, wenn der zweite Knoten eingerichtet ist, die im ihm zugeordneten Speicher gespeicherten Profile periodisch zu senden.

Vorzugsweise unterstützen die Knoten des erfindungsgemäßen Kommunikationsnetzes einen ersten Betriebsraodus, in welchem die Sender-Empfängereinheiten wenigstens der mobilen Knoten direkt, ohne Einbeziehung eines die Profile weiterleitenden Zwischenknotens, miteinander kommunizieren.

Vorzugsweise kommunizieren die Sender-Bmpfängereinheiten im ersten Betriebsmodus gemäß einem unter WLAN, WIMAX und Bluetooth ausgewählten Standard.

Die Knoten können auch einen zweiten Betriebsmodus unterstützen, in welchem jeweils zwei der mobilen Knoten über einen ortsfesten Knoten miteinander kommunizieren. In diesem Fall umfasst der ortsfesten Knoten vorzugsweise als Sender-Empfängereinheit eine Basisstation eines zellularen Mobilfunknetzes, während die Sender-Empfängereinheiten der mobilen Knoten jeweils ein Endgerät des Mobilfunknetzes umfassen.

Einer besonders bevorzugten Ausgestaltung zufolge ist jeder mobile Knoten eingerichtet, vom ersten Betriebszustand zeitweilig in den zweiten Betriebszustand zu wechseln, wenn im ersten Betriebszustand während einer vorgegebenen Zeitspanne keine Kommunikation mit einem anderen Knoten zustande kommt. Auf diese weise kann sich ein mobiler Knoten, wenn er sich außerhalb der Reichweite der Sender-Empfängereinheiten der anderen mobilen Knoten befindet, über den ortsfesten Knoten Aufschluss über die Betriebszustände der Maschinen verschaffen, soweit diese beim ortfesten Knoten bekannt sind.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines erfindungsgemäßen Kommunikationssystems;
- Fig. 2: ein Blockdiagramm eines mobilen Knotens; und
- Fig. 3: ein Flussdiagramm eines Betriebsverfahrens, das in einem mobilen Knoten des Kommunikationssystems aus Fig. 1 abläuft.

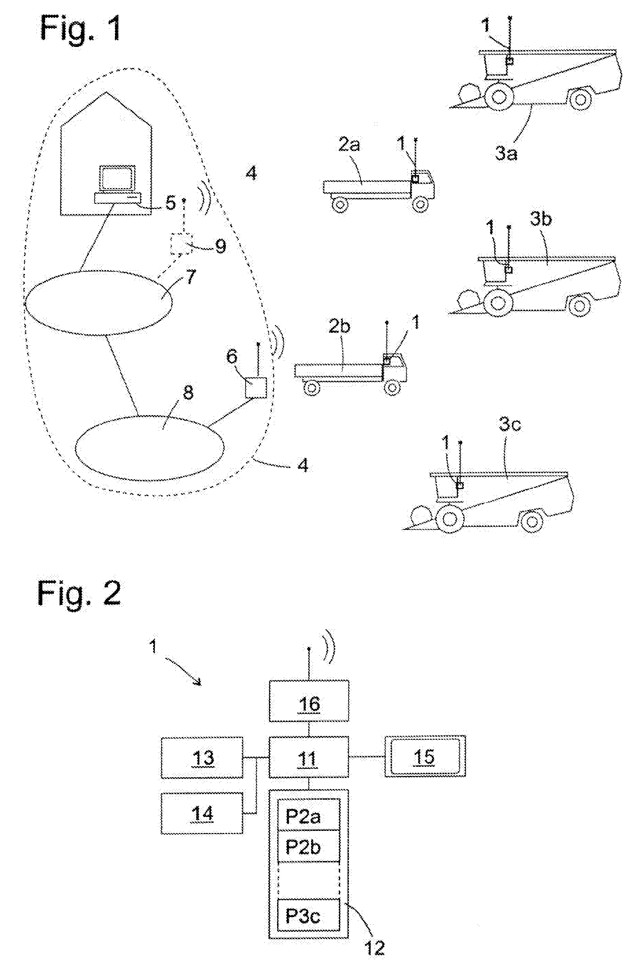

Das in Fig, 1 gezeigte Kommunikationssystem umfasst eine Mehrzahl von mobilen Knoten 1, die jeweils auf einem Fahrzeug 2a, 2b, 3a, 3b bzw. 3c installiert sind, sowie einen ortsfesten Knoten 4. In dem System der Fig. 1 sind zwei mobile Knoten 1 auf Transportfahrzeugen 2a, 2b, hier als LKWs dargestellt, installiert, und drei mobile Knoten 1 auf Erntemaschinen 3a bis 3c. Die auf den verschiedenen Fahrzeugtypen installierten Knoten 1 können im Aufbau identisch sein.

Bei der im Folgenden mit Bezug auf Fig. 2 gegebenen Beschreibung eines Knotens 1 wird angenommen, dass es sich um den Knoten des Fahrzeugs 2a handelt, doch trifft die Beschreibung in analoger weise auch auf die Knoten der anderen Fahrzeuge zu.

Der Knoten 1 umfasst, wie in Fig. 2 gezeigt, einen Prozessor 11, einen Speicher 12 zum Speichern Betriebsparameterprofilen P2a, P2b, P3a, P3b, P3c aller Fahrzeuge 2a, 2b, ..., 3c des Systems. Das Profil P2a, welches das des Fahrzeug 2a beschreibt, auf dem der betreffende Knoten 1 installiert ist, wird im Folgenden auch als Selbstprofil bezeichnet, die anderen Profile P2b, P3a, P3b, P3c auch als Fremdprofile.

Der Prozessor 11 ist mit diversen Peripherieeinheiten verbunden, um von diesen Betriebsparameter abzufragen und in seinem Selbstprofil P2a im Speicher 12 zu speichern, so etwa mit einem GPS-Empfänger 13 zum Abfragen der aktuellen geografischen Position des Fahrzeuges, Füllstandssensoren 14 zum Erfassen einer gegenwärtig in einem Lagerraum des Fahrzeuges befindlichen Erntegutmenge oder des Füllstandes eines Kraftstofftanks des Fahrzeugs, u. dgl..

Zum in dem Speicher 12 gespeicherten Profil P2a, ..., P3c jedes Fahrzeuges können auch konstante Eigenschaften des betreffenden Fahrzeugs gehören, wie etwa das Fassungsvermögen des Vorratsbehälters des Fahrzeuges, im Falle einer Erntemaschine deren Ernteleistung, etc.

Eine Benutzerschnittstelle 15 ermöglicht es dem Fahrer des Fahrzeuges 2a, die in dem Speicher 12 von dessen Knoten 1 gespeicherten. Profile abzufragen, um anhand von diesen eine Entscheidung über das weitere Vorgehen zu treffen. So kann z.B. der Fahrer des Fahrzeugs 2 a, das ein Transportfahrzeug ist, aus den gespeicherten Fremdprofilen P3a, P3b, P3c die Füllstände der Enteguttanks der einzelnen Erntemaschinen 3a, 3b, 3c und deren Positionen abfragen, um dann diejenige Erntemaschine auszuwählen und anzusteuern, die als nächste einer Entladung bedarf, oder um im Falle von mehreren Erntemaschinen, die der Entladung bedürfen, die am besten zu erreichende anzusteuern oder diejenige, die die höchste Ernteleistung hat und deren Stillstand daher aus wirtschaftlichen Gründen am wichtigsten zu vermeiden ist. Anhand des Fremdprofils P2b kann der Fahrer ferner beurteilen, ob das Transportfahrzeug 2b möglicherweise besser als sein eigenes Fahrzeug 2a in der Lage ist, eine bestimmte entladebedürftige Erntemaschine zu entladen, so dass nicht mehrere Transportfahrzeuge diese Erntemaschine ansteuern. Natürlich brauchen die Aufgaben des Prozessors 11 nicht auf das Zusammentragen und Anzeigen von Profilen der einzelnen Fahrzeuge beschränkt zu sein; er kann auch durch geeignete Aufbereitung der in den Profilen enthaltenen Informationen dem Fahrer die Entscheidungsfindung erleichtern oder unter bestimmten Umständen das Fällen einer Entscheidung sogar ganz abnehmen,

Um die im Speicher 12 gespeicherten Fremdprofile P2b, P3a, P3b, P3c aktuell zu halten, benötigt der Knoten 1 des Fahrzeugs 2a eine Sender-Empfängereinheit 16, die in der Lage ist, mit Sender-Empfängereinheiten der Knoten 1 der anderen Fahrzeuge zu kommunizieren, Im einfachsten Fall ist die SenderEmpfängereinheit eine Funkschnittstelle, die in der Lage ist, mit der Funkschnittstelle jedes anderen Knotens 1, der sich innerhalb ihrer Reichweite befindet, direkt zu kommunizieren. Die Funkschnittstelle kann z.B. nach dem WLAN-, WIMAX- oder Bluetooth-Standard oder einem beliebigen anderen eine Netzstruktur mit dynamisch wechselnden Teilnehmern unterstützenden Standard arbeiten; stellvertretend für diese verschiedenen Standards wird in der weiteren Beschreibung nur noch von WLAN die Rede sein,

Einer zweiten einfachen Ausgestaltung zufolge umfasst die Sender-Empfängereinheit 16 ein Endgerät für zellularen Mobilfunk, und der ortsfeste Knoten 4 umfasst eine mit den Endgeräten kompatible Basisstation 6, die einem stationären Server 5 als Sender-Empfängereinheit dient, Der Server 5 ist mit der Basisstation 6 über das Internet 7 und ortsfeste Infrastruktur 8 des zellularen Mobilfunksystems verbunden. Sowohl die ortsfeste Infrastruktur 8 als auch das Internet 7 sind für die zwischen dem Server 5 und den mobilen Knoten 1 übertragenen Daten transparent, so dass sie zusammen mit der Basisstation 6 und dem Server 5 als Netzknoten 4 aufgefasst werden können.

Bei der im Folgenden betrachteten bevorzugten Ausgestaltung der Erfindung umfasst die Sender-Empfängereinheit 16 sowohl eine WLAN-Funkschnittstelle als auch ein Endgerät für zellularen Mobilfunk und ist zwischen einem Betriebszustand, in dem sie über zellularen Mobilfunk kommuniziert, und einem WLAN-Kommunikationsbetriebszustand umschaltbar.

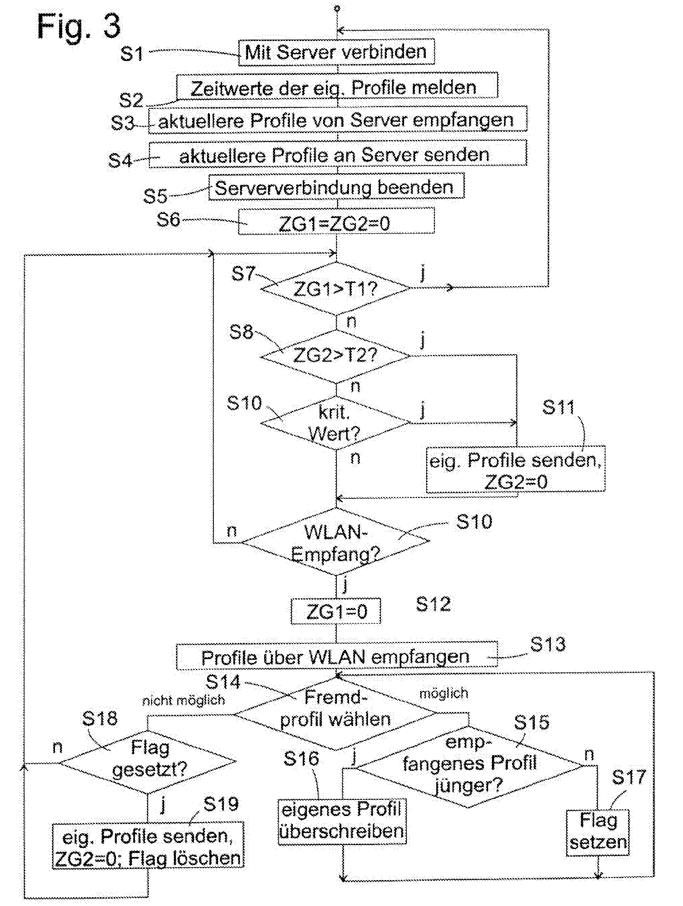

Die Arbeitsweise des in Fig. 1 gezeigten Netzwerkes wird anhand des Flussdiagramms von Fig. 3 erläutert, welches ein im Prozessor 11 eines mobilen Knotens 1 ausgeführtes Arbeitsverfahren zeigt.

Das Verfahren setzt bei Schritt S1 mit der Inbetriebnahme des Fahrzeuges 2a ein, an dem der Knoten 1 installiert ist. Es wird angenommen, dass vor Inbetriebnahme des Fahrzeuges 2a keine Daten zwischen dessen Knoten 1 und den anderen Knoten 1, 4 des Netzwerks übertragen werden. Der Speicher 12 des Fahrzeuges 2a enthält daher entweder außer dem Eigenprofil P2a des Fahrzeugs 2a keine weiteren Profile, oder darin vorhandene Fremdprofile sind höchstwahrscheinlich veraltet, Daher wird zunächst in dem Schritt S1 eine Verbindung des mobilen Knotens 1 zum Server 5 über das zellulare Mobilfunknetz 8 und das Internet 7 hergestellt.

Über die bestehende Verbindung meldet der Knoten 1 zunächst in Schritt S2 die Zeitwerte der eigenen Profile, das heißt des Selbstprofils und, wenn vorhanden, der in seinem Speicher 12 gespeicherten Fremdprofile an den Server 5. In einem Speicher des Servers sind Profile aller Fahrzeuge 2a, 2b, 3a, 3b, 3c jeweils in Verbindung mit einem den Zeitpunkt ihrer Erzeugung spezifierenden Zeitwert gespeichert. Der Server 5 vergleicht jeden in Schritt S2 übermittelten Zeitwert mit dem dem gleichen Fahrzeug zugeordneten Zeitwert in seinem Speicher, um festzustellen, welches Profil das aktuellere ist. Wenn der Zeitwert eines am Server gespeichertem Profils aktueller ist, sendet der Server 5 das entsprechende Profil an den mobilen Knoten 1 und dieser empfängt es in Schritt S3 und überschreibt damit das entsprechende Profil in seinem Speicher. wenn der Server feststellt, dass das am mobilen Knoten 2a gespeicherte Profil das aktuellere ist, überträgt er statt dessen eine Sendeaufforderung an den mobilen Knoten la, und dieser sendet das angeforderte Profil in Schritt S4. Der Server 5 verwendet das empfangene Profil, um damit das bei ihm gespeicherte, ältere zu überschreibet. Somit verzügen nach Schritt S4 der Server 5 und der Knoten 1 über identische Profile, In Schritt S5 wird die Verbindung des mobilen Knotens la zum Server 4 beendet.

Die Initialisierung des mobilen Knotens 2a endet damit, dass in Schritt S6 zwei Zeitgeber ZG1, ZG2 auf Null gesetzt werden. Diese Zeitgeber werden im Folgenden im Laufe der Zeit kontinuierlich inkrementiert, was im Flussdiagramm nicht mehr dargestellt ist.
In Schritt S7 wird überprüft, ob seit Rücksetzen des Zeitgebers ZG1 eine Zeitspanne T1 verstrichen ist. Diese Zeitspanne kann einige Minuten bis Stunden betragen. Das Ergebnis ist daher zunächst, dass die Zeitspanne T1 nicht verstrichen ist, und das Verfahren geht weiter zu Schritt S8, in welchem überprüft wird, ob für den Zeitgeber ZG2 eine Zeitspanne T2 verstrichen ist, die deutlich kürzer als T1 ist, Wenn auch diese Zeitspanne noch nicht verstrichen ist, geht das Verfahren zu Schritt S9, in welchem überprüft wird, ob ein Betriebsparameter des Fahrzeugs einen kritischen Wert angenommen hat, der einem anderen Knoten 1 mitgeteilt werden sollte. Ein solcher kritischer Wert kann z.B. ein hoher Füllstand des Ernteguttanks sein, der eine alsbaldige Entladung erforderlich macht, um das Fahrzeug einsatzfähig zu erhalten, oder ein niedriger Füllstand des Kraftstofftanks, der ein alsbaldiges Betanken durch ein Versorgungsfahrzeug erforderlich macht. Wenn kein kritischer Wert vorliegt, geht das Verfahren weiter zu Schritt S10, in welchem überprüft wird, ob Daten per WLAN von den anderen Knoten 2b, 3a, ..., 3c zu empfangen sind. Wenn dies nicht der Fall ist, werden die Schritte S7, S8, S9, S10 so lange zyklisch wiederholt, bis entweder die Zeitspanne T2 verstrichen ist, ein kritischer Wert aufgetreten ist oder Daten per WLAN zu empfangen sind. In den ersteren zwei Fällen sendet der mobile Knoten la die in seinem Speicher gespeicherten eigenen Profile in Schritt S11 und setzt dann den Zeitgeber ZG2 auf Null zurück.
In letzterem Falle setzt der Knoten 1 des Fahrzeugs 2a in Schritt S12 den Zeitgeber ZG1 auf Null zurück und empfängt die von dem anderen mobilen Knoten 1 gesendeten Profile der einzelnen Fahrzeuge 2a, ..., 3c in Schritt S13. In Schritt S14 wählt der Knoten 1 unter den empfangenen Profilen ein Fremdprofil aus. In Schritt S15 wird anhand eines mit dem ausgewählten Fremdprofil übertragenen Zeitwerts entschieden, ob das eigene, lokal gespeicherte Profil oder das in Schritt S13 empfangene Profil jünger ist. Wenn das empfangene Profil sich als jünger herausstellt, verzweigt das Verfahren von Schritt S15 nach S16, in welchem das lokal gespeicherte Profil mit dem empfangenen Profil überschrieben wird. Wenn sich hingegen unter den empfangenen Profilen eines befindet, das älter als das für das gleiche Fahrzeug im Knoten 1 des Fahrzeugs 2a gespeicherte Profil ist, wird dies in Schritt S17 durch Setzen eines Flags vermerkt.

Im Anschluss an Schritt S16 oder S17 kehrt das Verfahren zu S14 zurück, wo ggf. ein weiteres Fremdprofil ausgewählt und für dieses die Schritte S15S17 wiederholt werden. Wenn kein zu verarbeitendes Fremdprofil übrig ist, geht das Verfahren von S14 zu S18 über, in dem der Status des Flags geprüft wird. Ist es nicht gesetzt, so geht das Verfahren direkt zu Schritt S7 zurück. Ist es gesetzt, so führt das Verfahren, bevor es zu S7 zurückkehrt, einen Schritt S19 aus, in welchem der Knoten 1 die in seinem eigenen Speicher 12 gespeicherten Profile per WLAN aussendet und anschließend den Zeitgeber ZG2 auf Null setzt und das Flag löscht. Es ist davon auszugehen, dass wenn der Knoten 1 des Fahrzeugs 2a in der Lage ist, Profile per WLAN von einem anderen Knoten zu empfangen, dieser andere Knoten auch in der Lage ist, vom Knoten 1 des Fahrzeugs 2a gesendete Profile zu empfangen, so dass es zweckmäßig ist, durch den schritt S19 auch die Profile dieses anderen Knotens zu aktualisierten.

Wenn ein Schritt S7 festgestellt wird, dass seit Rücksetzen des Zeitgebers ZG1 eine Zeitspanne T1 verstrichen ist, so bedeutet dies, dass die Fremdprofile im Knoten 1 des Fahrzeugs 2a seither nicht mehr aktualisiert worden sind, und dass wahrscheinlich das aktuelle Eigenprofil im gleichen Zeitraum an kein anderes Fahrzeug erfolgreich übermittelt wurde. Um einer Überalterung der Profile vorzubeugen, wiederholt der Knoten 1 des Fahrzeugs 2a daher die Initialisierungsschritte S1 bis S6.

Die kostenträchtige Nutzung des zellularen Mobilfunknetzes bleibt so auf Situationen beschränkt, in denen WLAN-Kommunikation nicht möglich ist. Dennoch verfügt jeder Knoten 1, 4 jederzeit über Profile aller Fahrzeuge, die eine zumindest näherungsweise Beurteilung des Zustandes des Gesamtsystems erlauben, so dass dezentral an jedem mobilen Knoten 1 entschieden werden kann, was das Fahrzeug 2a, 2b, 3a, 3b oder 3c, an dem dieser Knoten 1 installiert ist, am sinnvollsten als Nächstes unternimmt.

Um die Kommunikationskosten weiter zu begrenzen, kann einer weiterentwickelten Ausgestaltung zufolge der Server 5 an eine eigene WLAN-Funkschnittstelle angeschlossen sein, die in Fig. 1 mit 9 bezeichnet ist. Die Verbindung zwischen dem Server 5 und der WLAN-Funkschnittstelle 9 kann direkt oder z.B., wie in der Fig. dargestellt, über das Internet 7 hergestellt sein, so dass der räumliche Abstand zwischen Server 5 und WLAN-Funkschnittstelle 9 beliebig groß sein kann. Die WLAN-Funkschnittstelle 9 befindet sich stationär an einem Ort, der wenigstens von einigen der Fahrzeuge 2a, 2b, 3a, 3b, 3c regelmäßig aufgesucht wird, wie etwa eine Sammelstelle, an der die Transportfahrzeuge 2a, 2b das Erntegut zusammentragen, oder ein Schuppen, in dem die Fahrzeuge bei Nichtgebrauch angestellt sind. Insbesondere letzterer Fall hat den Vorteil, dass alle Fahrzeuge bei Inbetriebnahme mit dem Server 5 per WLAN kommunizieren können. So können die Initialisierungsschritte S1 bis S5 des Verfahrens von Fig. 3 entfallen und das Betriebsverfahren eines mobilen Knotens 1 kann direkt mit Schritt S6 beginnen, wobei dann der Knoten 1 die Profile in Schritt S12 vom Server 5 über die Funkschnittstelle 9 empfängt.

## Patentansprüche

1. Kommunikationsnetz mit einer Mehrzahl von Kno-4), die mit Sender-Empfängereinheiten (16; 6, 9) für leitungsungebundene Kommunikation ausgestattet sind, darunter als mobile Knoten (1) bezeichnete Knoten, die auf mobilen Maschinen (2a, 2b, 3a, 3b, 3c) installiert sind, derart ausgestattet, dass jedem Knoten (1, 4) ein Speicher (11) für Betriebsparameterprofile (P2a, P2b, P3a, P3b, P3c) mehrerer der mobilen Maschinen (2a, 2b, 3a, 3b, 3c) zugeordnet ist und dass jeder Knoten (1; 4) eingerichtet ist, in dem ihm zugeordneten Speicher gespeicherte Profile über seine Sender-Empfängereinheit (16; 6, 9) auszustrahlen und anhand eines von einem anderen Knoten (1; 4) her empfangenen Profils einer der mobilen Maschinen das in dem ihm zugeordneten Speicher (11) gespeicherte Profil dieser Maschine zu aktualisieren, **dadurch gekennzeichnet, dass** die Knoten (1) einen ersten Betriebsmodus (S7-S16) unterstützen, in welchem die Sender-Empfängereinheiten (16) wenigstens der mobilen Knoten (1) direkt miteinander kommunizieren und einen zweiten Betriebsmodus (S1-S5) unterstützen, in welchem jeweils zwei der mobilen Knoten mittelbar über einen ortsfesten Knoten (4) miteinander kommunizieren
wobei die Sender-Empfängereinheiten (16) der mobilen Knoten (1) jeweils ein Endgerät für zellularen Mobilfunk umfassen,
und der ortsfeste Knoten (4) eine mit den Endgeräten kompatible Basisstation (6) umfasst, die einem stationären Server (5) als Sender-Empfängereinheit (16) dient, wobei
der Server (5) dazu eingerichtet ist,
in einem Speicher des Servers Profile aller mobilen Maschinen (2a, 2b, 3a, 3b, 3c) jeweils in Verbindung mit einem den Zeitpunkt ihrer Erzeugung spezifizierenden Zeitwert zu speichern und jeden übermittelten Zeitwert mit dem der gleichen mobilen Maschine (2a, 2b, 3a, 3b, 3c) zugeordneten Zeitwert in seinem Speicher zu vergleichen, um festzustellen, welches Profil das aktuellere ist.

2. Kommunikationsnetz nach Anspruch 1, **dadurch gekennzeichnet, dass** jedem gespeicherten Betriebsparameterprofil (P2a, P2b, P3a, P3b, P3c) eine Zeitangabe zugeordnet ist und dass die Knoten (1; 4) eingerichtet sind, bei der Aktualisierung der Betriebsparameterprofile (P2a, P2b, P3a, P3b, P3c) von zwei eine gleiche mobile Maschine (2a, 2b, 3a, 3b, 3c) betreffenden Profilen anhand der Zeitangabe zu ermitteln, welches der beiden Profile das ältere ist, und dieses ältere Profil mit dem jüngeren Profil zu überschreiben (S3; S4; S15).

3. Kommunikationsnetz nach Anspruch 2, **dadurch gekennzeichnet, dass** ein erster Knoten (4) eingerichtet ist, bei einer Aktualisierung eines Profils folgende Schritte auszuführen:
a) Empfangen (S2) eines Satzes von Zeitangaben, von denen jede jeweils einem Profil (P2a, P2b, P3a, P3b, P3c) einer Maschine (2a, 2b, 3a, 3b, 3c) in einem einem zweiten Knoten (1) zugeordneten Speicher zugeordnet ist, von dem zweiten Knoten (1),
b) durch Vergleichen mit den entsprechenden Zeitangaben im dem ersten Knoten (4) zugeordneten Speicher, Ermitteln der Maschinen, deren Profile in dem dem ersten Knoten (4) zugeordneten Speicher überschrieben werden müssen,
c) Auffordern (S3) des zweiten Knotens (1) zur Übermittlung der Profile dieser Maschinen, und
d) Speichern der von diesem auf die Aufforderung hin übermittelten (S4) Profile anstelle der zu überschreibenden Profile.

4. Kommunikationsnetz nach Anspruch 3, **dadurch gekennzeichnet, dass** der erste Knoten (4) ferner eingerichtet ist, in Schritt b) zu ermitteln, welche Profile in dem Speicher (11) des zweiten Knotens (1) überschrieben werden müssen, und in einem Schritt e) diese Profile an den zweiten Knoten zu übermitteln (S4).

5. Kommunikationsnetz nach Anspruch 2, **dadurch gekennzeichnet, dass** ein erster Knoten (1) eingerichtet ist, bei einer Aktualisierung eines Profils (P2a, P2b, P3a, P3b, P3c) folgende Schritte auszuführen:
a') Empfangen (S12) eines in einem einem zweiten Knoten (1; 4) zugeordneten Speicher (11) gespeicherten Profils (P2a, P2b, P3a, P3b, P3c) und einer diesem Profil zugeordneten Zeitangabe von dem zweiten Knoten (1; 4),
b') Vergleichen (S13) der empfangenen Zeitangabe mit der entsprechenden Zeitangabe im dem ersten Knoten (1) zugeordneten Speicher (11) und Überschreiben (S15) des Profils im dem ersten Knoten (1) zugeordneten Speicher (11) mit dem empfangenen Profil, wenn der Vergleich ergibt, dass die dem letzteren Profil zugeordnete Zeitangabe die jüngere ist.

6. Kommunikationsnetz nach Anspruch 5, **dadurch gekennzeichnet, dass** der zweite Knoten (1) eingerichtet ist, die im ihm zugeordneten Speicher gespeicherten Profile periodisch zu senden (S8, S10).

7. Kommunikationsnetz nach einem der vorhergehenden Ansprüche, **dadurch gekennzeichnet, dass** die Sender-Empfängereinheiten (16) im ersten Betriebsmodus gemäß einem unter WLAN, WIMAX und Bluetooth ausgewählten Standard kommunizieren.

8. Kommunikationsnetz nach einem der vorhergehenden Ansprüche, **dadurch gekennzeichnet, dass** der ortsfeste Knoten (4) als Sender-Empfängereinheit (6, 9) eine Basisstation (6) eines zellularen Mobilfunknetzes umfasst und dass die Sender-Empfängereinheiten (16) der mobilen Knoten (1) jeweils ein Endgerät des Mobilfunknetzes umfassen.

9. Kommunikationsnetz nach Anspruch 8, **dadurch gekennzeichnet, dass** jeder mobile Knoten (1) eingerichtet ist, vom ersten Betriebszustand zeitweilig in den zweiten Betriebszustand zu wechseln, wenn im ersten Betriebszustand während einer vorgegebenen Zeitspanne (T1) keine Kommunikation mit einem anderen Knoten zustande kommt.

10. Kommunikationsnetz nach einem der vorhergehenden Ansprüche, **dadurch gekennzeichnet, dass** die mobilen Maschinen (2a, 2b, 3a, 3b, 3c) landwirtschaftliche Arbeitsmaschinen (3a, 3b, 3c) und/oder Transportmaschinen (2a, 2b) umfassen.

11. Kommunikationsnetz nach Anspruch 10, **dadurch gekennzeichnet, dass** die mobilen Maschinen (2a, 2b, 3a, 3b, 3c) einen Vorratsbehälter aufweisen und ausgelegt sind, Inhalt des Vorratsbehälters an eine andere der mobilen Maschinen (2a, 2b, 3a, 3b, 3c) zu übergeben und/oder von dort zu übernehmen, und dass die in den Profilen (P2a, P2b, P3a, P3b, P3c) gespeicherten Betriebsparameter den Füllstand des Vorratsbehälters ist und den Standort der mobilen Maschine umfassen.

12. Kommunikationsnetz nach Anspruch 10 oder 11, **dadurch gekennzeichnet, dass** einer der in den Profilen (P2a, P2b, P3a, P3b, P3c) gespeicherten Betriebsparameter eine Angabe über die Leistungsfähigkeit der Maschine (2a, 2b, 3a, 3b, 3c) beinhaltet.

## Claims

1. A communication network comprising a plurality of nodes (1, 4) equipped with transmitter-receiver units (16, 6, 9) for wireless communication, including nodes referred to as mobile nodes (1), which are installed on mobile machines (2a, 2b, 3a, 3b, 3c), of such a configuration that associated with each node (1, 4) is a memory (11) for operating parameter profiles (P2a, P2b, P3a, P3b, P3c) of a plurality of the mobile machines (2a, 2b, 3a, 3b, 3c) and that each node (1, 4) is adapted to emit profiles stored in the memory associated with it by way of its transmitter-receiver unit (16, 6, 9) and on the basis of a profile received from another node (1, 4) in respect of one of the mobile machines to update the profile of said machine that is stored in the memory (11) associated therewith, **characterised in that** the nodes (1) support a first operating mode (S7-S16) in which the transmitter-receiver units (16) at least of the mobile nodes (1) communicate directly with each other and support a second operating mode (S1-S5) in which two respective ones of the mobile nodes communicate with each other indirectly by way of a stationary node (4),
wherein the transmitter-receiver units (16) of the mobile nodes (1) respectively include a terminal device for cellular mobile radio, and
the stationary node (4) includes a base station (6) which is compatible with the terminal devices and which serves as a transmitter-receiver unit (16) for a stationary server (5),
wherein the server (5) is adapted to store in a memory of the server profiles of all mobile machines (2a, 2b, 3a, 3b, 3c) respectively in conjunction with a time value specifying the time of its production and to compare each communicated time value with the time value associated with the same mobile machine (2a, 2b, 3a, 3b, 3c) in its memory in order to establish which profile is the more up-to-date.

2. A communication network according to claim 1 **characterised in that** a time stamp is associated with each stored operating parameter profile (P2a, P2b, P3a, P3b, P3c) and that the nodes (1, 4) are adapted upon updating of the operating parameter profiles (P2a, P2b, P3a, P3b, P3c) of two profiles concerning an identical mobile machine (2a, 2b, 3a, 3b, 3c) to ascertain on the basis of the time stamp which of the two profiles is the older and to overwrite that older profile with the later profile (S3; S4; S15).

3. A communication network according to claim 2 **characterised in that** a first node (4) is adapted in an updating operation of a profile to carry out the following steps:
a) receive (S2) a set of time stamps, each of which is associated with a respective profile (P2a, P2b, P3a, P3b, P3c) of a machine (2a, 2b, 3a, 3b, 3c) in a memory associated with a second node (1) from the second node (1),
b) by comparison with the corresponding time stamps in the memory associated with the first node (4) ascertain the machines whose profiles must be overwritten in the memory associated with the first node (4),
c) prompt (S3) the second node (1) to communicate the profiles of said machines, and
d) store the profiles communicated (S4) by same in response to the prompt instead of the profiles to be overwritten.

4. A communication network according to claim 3 **characterised in that** the first node (4) is further adapted in step b) to ascertain which profiles in the memory (11) of the second node (1) have to be overwritten and in a step (e) to communicate said profiles to the second node (S4).

5. A communication network according to claim 2 **characterised in that** a first node (1) is adapted in an updating operation of a profile (P2a, P2b, P3a, P3b, P3c) to carry out the following steps:
a') receive (S12) a profile (P2a, P2b, P3a, P3b, P3c) stored in a memory (11) associated with a second node (1, 4) and a time stamp associated with that profile from the second node (1, 4), and
b') compare (S13) the received time stamp to the corresponding time stamp in the memory (11) associated with the first node (1) and overwrite (S15) the profile in the memory (11) associated with the first node (1) with the received profile if the comparison shows that the time stamp associated with the latter profile is the later one.

6. A communication network according to claim 5 **characterised in that** the second node (1) is adapted periodically to send (S8, S10) the profiles stored in the memory associated therewith.

7. A communication network according to one of the preceding claims **characterised in that** the transmitter-receiver units (16) in the first operating mode communicate in accordance with a standard selected from WLAN, WIMAX and Bluetooth.

8. A communication network according to one of the preceding claims **characterised in that** the stationary node (4) includes as the transmitter-receiver unit (6, 9) a base station (6) of a cellular mobile radio network and that the transmitter-receiver units (16) of the mobile nodes (1) respectively include a terminal device of the mobile radio network.

9. A communication network according to claim 8 **characterised in that** each mobile node (1) is adapted temporarily to change from the first operating state to the second operating state if no communication with another node occurs in the first operating state during a predetermined period of time (T1).

10. A communication network according to one of the preceding claims **characterised in that** the mobile machines (2a, 2b, 3a, 3b, 3c) include agricultural working machines (3a, 3b, 3c) and/or transport machines (2a, 2b).

11. A communication network according to claim 10 **characterised in that** the mobile machines (2a, 2b, 3a, 3b, 3c) have a storage container and are adapted to transfer content of the storage container to another of the mobile machines (2a, 2b, 3a, 3b, 3c) and/or to receive same therefrom and that the operating parameters stored in the profiles (P2a, P2b, P3a, P3b, P3c) include the filling level of the storage container and the location of the mobile machine.

12. A communication network according to claim 10 or claim 11 **characterised in that** one of the operating parameters stored in the profiles (P2a, P2b, P3a, P3b, P3c) contains information about the performance of the machine (2a, 2b, 3a, 3b, 3c).

## Revendications

1. Réseau de communication comprenant une pluralité de noeuds (1, 4) qui sont équipés d'unités émettrices-réceptrices (16 ; 9) pour une communication sans fil, parmi lesquels des noeuds dits noeuds mobiles (1) qui sont installés sur des machines mobiles (2a, 2b, 3a, 3b, 3c), conçu de façon qu'à chaque noeud (1, 4) soit associée une mémoire (11) pour des profils de paramètres d'exploitation (P2a, P2b, P3a, P3b, P3c) de plusieurs des machines mobiles (2a, 2b, 3a, 3b, 3c) et de façon que chaque noeud (1 ; 4) soit agencé pour diffuser, par l'intermédiaire de son unité émettrice-réceptrice (16 ; 9), des profils mémorisés dans la mémoire qui lui est associée et, à l'aide d'un profil d'une des machines mobiles reçu d'un autre noeud (1 ; 4), pour actualiser le profil de cette machine mémorisé dans la mémoire (11) qui lui est associée, **caractérisé en ce que** les noeuds (1) supportent un premier mode d'exploitation (S7-S16) dans lequel les unités émettrices-réceptrices (16) au moins des noeuds mobiles (1) communiquent directement entre elles, et supportent un second mode d'exploitation (S1-S5) dans lequel à chaque fois deux des noeuds mobiles communiquent entre eux indirectement par l'intermédiaire d'un noeud fixe (4), les unités émettrices-réceptrices (16) des noeuds mobiles (1) renfermant à chaque fois un poste terminal de téléphonie mobile cellulaire, et le noeud fixe (4) renfermant une station de base (6) qui est compatible avec les postes terminaux et qui sert d'unité émettrice-réceptrice (16) à un serveur fixe (5), le serveur (5) étant agencé pour mémoriser, dans une mémoire du serveur, des profils de toutes les machines mobiles (2a, 2b, 3a, 3b, 3c) à chaque fois en liaison avec une valeur de temps spécifiant le moment de leur génération et pour comparer chaque valeur de temps transmise à la valeur de temps associée à la même machine mobile (2a, 2b, 3a, 3b, 3c) dans une mémoire, afin de déterminer quel profil est le plus actuel.

2. Réseau de communication selon la revendication 1, **caractérisé en ce qu'**à chaque profil de paramètres d'exploitation mémorisé (P2a, P2b, P3a, P3b, P3c) est associée une indication de temps, et **en ce que** les noeuds (1 ; 4) sont agencés pour déterminer, lors de l'actualisation des profils de paramètres d'exploitation (P2a, P2b, P3a, P3b, P3c) de deux profils relatifs à une même machine mobile (2a, 2b, 3a, 3b, 3c) à l'aide de l'indication de temps, lequel des deux profils est le plus ancien et pour écraser ce profil plus ancien par le profil plus récent (S3 ; S4 ; S15).

3. Réseau de communication selon la revendication 2, **caractérisé en ce qu'**un premier noeud (4) est agencé pour réaliser les étapes suivantes lors d'une actualisation d'un profil :
a) réception (S2), à partir d'un second noeud (1), d'un ensemble d'indications de temps dont chacune est associée à chaque fois à un profil (P2a, P2b, P3a, P3b, P3c) d'une machine (2a, 2b, 3a, 3b, 3c) dans une mémoire associée au second noeud (1),
b) par comparaison avec les indications de temps correspondantes contenues dans la mémoire associée au premier noeud (4), détermination des machines dont les profils doivent être écrasés dans la mémoire associée au premier noeud (4),
c) sollicitation (S3) du second noeud (1) pour transmettre les profils de ces machines, et
d) mémorisation des profils transmis (S4) par celui-ci à la suite de sa sollicitation, à la place des profils à écraser.

4. Réseau de communication selon la revendication 3, **caractérisé en ce que** le premier noeud (4) est également agencé pour déterminer à l'étape b) quels profils doivent être écrasés dans la mémoire (11) du second noeud (1) et pour transmettre, à une étape e), ces profils au second noeud (S4).

5. Réseau de communication selon la revendication 2, **caractérisé en ce qu'**un premier noeud (1) est agencé pour réaliser les étapes suivantes lors de l'actualisation d'un profil (P2a, P2b, P3a, P3b, P3c) :
a') réception (S12) d'un profil (P2a, P2b, P3a, P3b, P3c) mémorisé dans une mémoire (11) associée à un second noeud (1 ; 4) et d'une indication de temps du second noeud (1 ; 4) associée à ce profil,
b') comparaison (S13) de l'indication de temps reçue avec l'indication de temps correspondante contenue dans la mémoire (11) associée au premier noeud (1), et écrasement (S15) du profil contenu dans la mémoire (11) associée au premier noeud (1) avec le profil reçu si la comparaison révèle que l'indication de temps associée au profil le plus ancien est la plus récente.

6. Réseau de communication selon la revendication 5, **caractérisé en ce que** le second noeud (1) est agencé pour émettre périodiquement les profils mémorisés dans la mémoire qui lui est associée (S8, S10).

7. Réseau de communication selon une des revendications précédentes, **caractérisé en ce que**, dans le premier mode d'exploitation, les unités émettrices-réceptrices (16) communiquent selon un standard choisi parmi WLAN, WIMAX et Bluetooth.

8. Réseau de communication selon une des revendications précédentes, **caractérisé en ce que** le noeud fixe (4) renferme, comme unité émettrice-réceptrice (6, 9), une station de base (6) d'un réseau cellulaire de téléphonie mobile, et **en ce que** les unités émettrices-réceptrices (16) des noeuds mobiles (1) renferment à chaque fois un poste terminal du réseau de téléphonie mobile.

9. Réseau de communication selon la revendication 8, **caractérisé en ce que** chaque noeud mobile (1) est agencé pour passer temporairement d'un premier état d'exploitation à un second état d'exploitation si, dans le premier état d'exploitation, aucune communication avec un autre noeud ne se produit pendant un laps de temps prédéfini (T1).

10. Réseau de communication selon une des revendications précédentes, **caractérisé en ce que** les machines mobiles (2a, 2b, 3a, 3b, 3c) englobent des machines agricoles (3a, 3b, 3c) et/ou des machines de transport (2a, 2b).

11. Réseau de communication selon la revendication 10, **caractérisé en ce que** les machines mobiles (2a, 2b, 3a, 3b, 3c) comportent un réservoir et sont conçues pour transférer le contenu du réservoir à une autre des machines mobiles (2a, 2b, 3a, 3b, 3c) et/ou pour le prendre en charge à partir de celles-ci, et **en ce que** les paramètres d'exploitation mémorisés dans les profils (P2a, P2b, P3a, P3b, P3c) englobent le niveau de remplissage du réservoir et la position de la machine mobile.

12. Réseau de communication selon la revendication 10 ou 11, **caractérisé en ce qu'**un des paramètres d'exploitation mémorisés dans les profils (P2a, P2b, P3a, P3b, P3c) comporte une indication sur la capacité productive de la machine (2a, 2b, 3a, 3b, 3c).
